# EUROPÄISCHE PATENTANMELDUNG

(11) **EP 0 630 594 A1**
(43) Veröffentlichungstag der Anmeldung: **28.12.1994**
(21) Anmeldenummer: 93110084.6
(22) Anmeldetag: 24.06.1993
(51) Int. Cl.: A45C 11/00

(54) **Behältnis für Kontaktlinsen und einen Vorrat an Kontaktlinsenflüssigkeit**

(71) Anmelder: Amend, Udo, D-76199 Karlsruhe (DE)
(72) Erfinder: Amend, Udo, D-76199 Karlsruhe (DE)
(74) Vertreter: Durm, Frank, Dipl.-Ing.

(57) **Zusammenfassung**

Ein Behältnis für Kontaktlinsen und für einen Vorrat an Kontaktlinsenflüssigkeit weist einen Grundkörper 1 mit einem Aufnahmeraum 2 für ein herausnehmbares Kontaktlinsenetui, eine den Aufnahmeraum 2 teilweise umgebende Flüssigkeitskammer 3 für die Kontaktlinsenflüssigkeit und einen an der Flüssigkeitskammer 3 angebrachten Dosierstutzen 4 auf. Mittels dieser Ausgestaltung ist ein Behältnis in höchst kompakter Bauweise geschaffen, welches den platzsparenden Transport sämtlicher, von einem Kontaktlinsenträger benötigter Utensilien sowie deren einfache Handhabung erlaubt. Das in dem Aufnahmeraum 2 untergebrachte Kontaktlinsenetui kann auf einfache Weise aus dem Behältnis entnommen und separat mitgeführt werden.

## Beschreibung

Die vorliegende Erfindung betrifft ein Behältnis für Kontaktlinsen und einen Vorrat an Kontaktlinsenflüssigkeit.

Ein Kontaktlinsenträger muß in der Regel die für die Aufbewahrung, Pflege, Reinigung und Desinfektion seiner Haftschalen notwendigen Utensilien stets mit sich führen. Neben dem Gefäß für die Kontaktlinsen selbst gehört dazu ein größerer Vorrat an Kontaktlinsenflüssigkeit. Bekannte Kontaktlinsenetuis bieten jedoch allenfalls Platz für ein kleines herausnehmbares Fläschchen. Insbesondere dann, wenn sich der Kontaktlinsenträger auf Reisen befindet, war er deshalb bisher gezwungen, einen separaten Vorratsbehälter mit Kontaktlinsenflüssigkeit mit sich zu führen. Die im Handel erhältlichen Vorratsbehälter, die üblicherweise als Einwegflaschen in größeren Gebinden angeboten werden, sind aufgrund ihres Volumens jedoch nicht dafür geeignet, ständig mitgeführt zu werden.

Es ist daher Aufgabe der vorliegenden Erfindung, ein Behältnis zu konzipieren, welches platzsparend sämtliche benötigten Utensilien eines Kontaktlinsenträgers aufnehmen kann und darüber hinaus eine einfache Handhabung derselben ermöglicht.

Gelöst wird die Aufgabe durch ein Behältnis, das sowohl die Kontaktlinsen als auch einen Vorrat an Kontaktlinsenflüssigkeit aufnimmt, wobei der Grundkörper dieses Behältnisses einen Aufnahmeraum für ein herausnehmbares Kontaktlinsenetui, eine den Aufnahmeraum teilweise umgebende Flüssigkeitskammer für die Kontaktlinsenflüssigkeit und einen an der Flüssigkeitskammer angebrachten Dosierstutzen aufweist. Es sind also alle benötigten Utensilien auf engstem Raum in einem einzigen Gegenstand untergebracht, der zum bequemen Mitführen bestens geeignet ist. Bei Bedarf kann das eigenständige Kontaktlinsenetui, das entsprechend klein ausgebildet werden kann, aus dem Behältnis herausgenommen werden. So kann das Kontaktlinsenetui zum Beispiel tagsüber separat mitgeführt und abends wieder in das Behältnis eingelegt werden. Zum Austausch der Kontaktlinsenflüssigkeit wird zunächst das Kontaktlinsenetui aus dem Aufnahmeraum entnommen und geöffnet. Daraufhin kann die benötigte Menge Kontaktlinsenflüssigkeit aus der Flüssigkeitskammer mittels des Dosierstutzens tropfenweise ausgegeben werden.

Vorteilhaft weist das Kontaktlinsenetui die Form eines rechteckigen Quaders mit einer ebenen Stirnwand auf, wobei der Aufnahmeraum von der Stirnseite her zugänglich ist, der Dosierstutzen an der Stirnwand der Flüssigkeitskammer angeordnet ist und eine Abdeckung für die Stirnwand vorgesehen ist. Somit sind alle zur Handhabung des Behältnisses erforderlichen Öffnungen von einer Seite her zugänglich und können nach Verwendung wieder durch die schützende Abdeckung verschlossen werden.

Der Aufnahmeraum kann rechteckig ausgebildet sein. Beispielsweise kann die Form des Aufnahmeraums auf ein Kontaktlinsenetui gemäß der europäischen Patentanmeldung 92 120 046 desselben Anmelders abgestimmt sein.

In einer besonders vorteilhaften Ausführungsform ist die Flüssigkeitskammer im Querschnitt L-förmig ausgebildet, wobei die beiden L-Schenkel den Aufnahmeraum einschließen. Durch diese Ausgestaltung wird der Innenraum des Behältnisses, das die Form eines rechteckigen Quaders hat, und ein ebenfalls rechteckiges, jedoch wesentlich kleineres Kontaktlinsenetui aufnehmen soll, optimal ausgenutzt; es kann also ein Maximum an Flüssigkeit eingefüllt werden.

In zweckmäßiger Weiterbildung der Erfindung ist an der Stirnwand des Grundkörpers ein Gewindeloch mit einem linksdrehenden Innengewinde vorgesehen, ist ferner der Dosierstutzen als zweifach abgestufter Hohlzylinder ausgebildet, welcher von einem ersten Zylinderabschnitt über einen flachen Auflagering in einen zweiten Zylinderabschnitt übergeht, wobei der zweite Zylinderabschnitt einen geringeren Außendurchmesser als der erste Zylinderabschnitt aufweist, trägt der erste Zylinderabschnitt ein linksdrehendes Außengewinde, trägt der zweite Zylinderabschnitt ein rechtsdrehendes Außengewinde und ist auf den zweiten Zylinderabschnitt eine Verschlußkappe aufschraubbar. Durch das offene Gewindeloch kann Kontaktlinsenflüssigkeit in die Flüssigkeitskammer eingefüllt werden. Anschließend wird der Dosierstutzen mit seinem ersten Zylinderabschnitt in das Gewindeloch mit linksdrehendem Innengewinde eingeschraubt, bis der flache Auflagering an der Stirnwand anliegt. Der nach außen ragende zweite Zylinderabschnitt des Dosierstutzens kann mittels der Verschlußkappe, die ein rechtsdrehendes Innengewinde besitzt, verschlossen werden. Wird nun die Verschlußkappe nach links gedreht und dadurch abgenommen, so wird der zweite Zylinderabschnitt des Dosierstutzens freigelegt, worauf Kontaktlinsenflüssigkeit aus der Flüssigkeitskammer entnommen werden kann. Dagegen wird durch Aufsetzen und Zuschrauben der Verschlußkappe auf den zweiten Zylinderabschnitt die Flüssigkeitskammer wieder fest verschlossen. Wird die Verschlußkappe daraufhin noch weiter nach rechts gedreht, so läßt sich dadurch bei Überschreiten eines kritischen Drehmoments der Dosierstutzen aus dem Gewindeloch in der Flüssigkeitskammer herausdrehen und schließlich ganz abnehmen. Das somit frei gewordene Gewindeloch stellt also eine Nachfüllöffnung für die Flüssigkeitskammer dar. Ist der Nachfüllvorgang abgeschlossen, so kann das Gewindeloch in der Flüssigkeitskammer durch Eindrehen des Dosierstutzens wieder dicht verschlossen werden.

Die Abdeckung ist zweckmäßig als auf den Grundkörper aufsteckbarer Deckel ausgebildet. Der Deckel kann somit auf einfache Weise abgenommen werden und behindert weder das Herausnehmen des Kontaktlinsenetuis noch die tropfenweise Entnahme von Kontaktlinsenflüssigkeit.

Die Erfindung wird anhand der beigefügten Zeichnungen näher erläutert. Es zeigen:

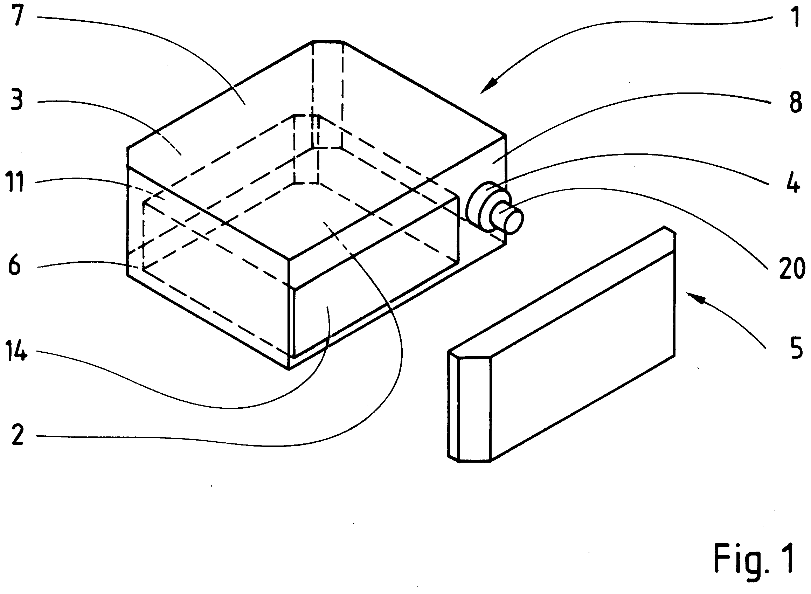

- Figur 1: Ein Behältnis in einer vereinfachten perspektivischen Darstellung, in etwa natürlicher Größe;
- Figur 2: das Behältnis von Figur 1 in einem Horizontalschnitt.

Das Behältnis besteht aus einem Grundkörper 1 mit einem Aufnahmeraum 2, einer Flüssigkeitskammer 3 und einem Dosierstutzen 4 sowie einem aufsteckbaren Deckel 5.

Der Grundkörper 1 des Behältnisses ist aus mehreren Kunststoffteilen zusammengesetzt, die im Spritzgußverfahren hergestellt und miteinander verschweißt sind. Im wesentlichen wird der Grundkörper 1 durch eine Bodenplatte 6, eine flächengleiche Deckplatte 7, eine Stirnwand 8, zwei Seitenwände 9, 9', eine Rückwand 10, eine an die Seitenwand 9 angrenzende Zwischenplatte 11, die zwischen der Bodenplatte 6 und der Deckplatte 7 angeordnet ist, und zwei an die Zwischenplatte 11 angesetzte Innenwände 12, 12' gebildet.

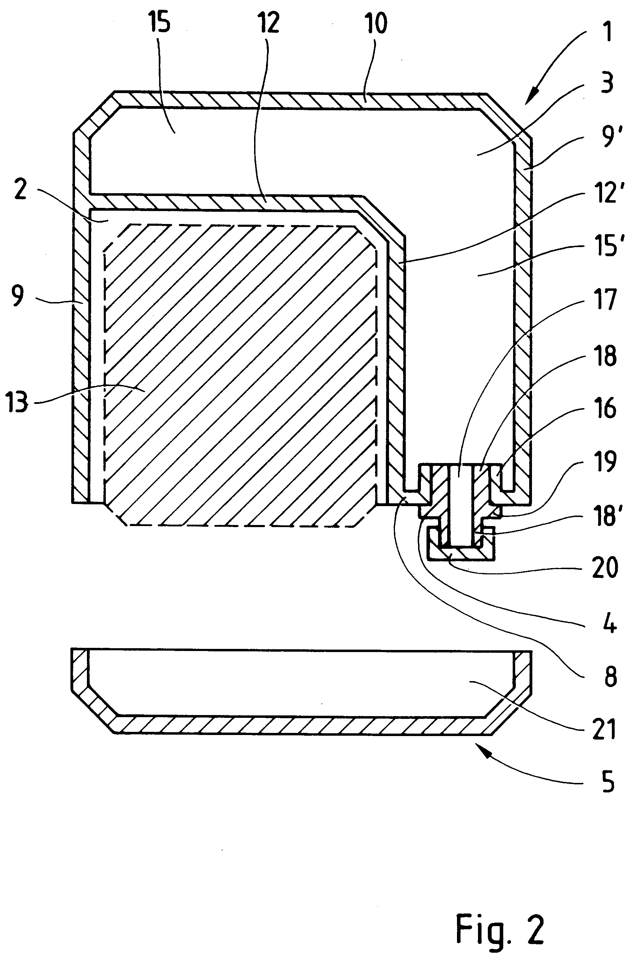

Im Innern des Grundkörpers 1 ist ein quaderförmiger Aufnahmeraum 2 für ein Kontaktlinsenetui 13 vorgesehen. In der Figur 2 ist das Kontaktlinsenetui 13 in eingeschobenem Zustand mit Strichlinien angedeutet. Der Aufnahmeraum 2 hat annähernd quadratischen Grundriß und ist durch eine Öffnung 14 in der Stirnwand 8 zugänglich. Begrenzt wird der Aufnahmeraum 2 durch einen Teil der Bodenplatte 6, einen Teil der Seitenwand 9, die beiden Innenwände 12, 12' und die Zwischenplatte 11. Dabei korrespondieren die Abmessungen des Aufnahmeraums 2 mit den Abmessungen des Kontaktlinsenetuis 13 so, daß dieses in eingeschobenem Zustand geringfügig aus dem Grundkörper 1 herausragt und vom Benutzer leicht entnommen werden kann..

Der Grundkörper 1 umgibt eine Flüssigkeitskammer 3, welche an den Aufnahmeraum 2 für das Kontaktlinsenetui 13 angrenzt. Die Flüssigkeitskammer 3 weist sowohl in einem Schnitt parallel zur Stirnwand 8 als auch in einem Schnitt parallel zur Bodenplatte 6 oder zu einer der Seitenwände 9 bzw. 9' einen L-förmigen Querschnitt auf. Dabei liegt der erste L-Schenkel 15 parallel zur Rückwand 10 und der zweite L-Schenkel 15' senkrecht zur Stirnwand 8.

An der Stirnwand 8 des Grundkörpers 1 steht ein Dosierstutzen 4 über, welcher durch ein Gewindeloch 16 mit linksdrehendem Innengewinde in die Flüssigkeitskammer 3 hineinreicht. Dieser Dosierstutzen 4 ist als zweifach abgestufter Hohlzylinder 17 ausgebildet, welcher einen ersten Zylinderabschnitt 18 mit einem linksdrehenden Außengewinde, einen sich daran anschließenden flachen Auflagering 19 und einen sich an den Auflagering 19 anschließenden zweiten Zylinderabschnitt 18' mit einem rechtsdrehenden Außengewinde geringeren Außendurchmessers aufweist. Dabei ist der erste Zylinderabschnitt 18 bis zum Auflagering 19 vollständig in das korrespondierende Gewindeloch 16 eingeschraubt. Auf dem Außengewinde des zweiten Zylinderabschnitts 18' ist eine außen geriffelte Verschlußkappe 20 mit einem rechtsdrehenden Innengewinde aufgeschraubt.

In beiden Zeichnungsfiguren ist der Deckel 5, der ebenfalls aus Kunststoff hergestellt ist in abgenommenem Zustand dargestellt. Der Deckel 5 weist eine der Stirnwand 8 zugewandte Höhlung 21 auf. Mittels nicht dargestellter Befestigungsmittel kann der Deckel 5 rastend am Grundkörper 1 befestigt werden, so daß in aufgestecktem Zustand die Stirnwand 8 des Grundkörpers 1 und damit sowohl der Aufnahmeraum 2 als auch der Dosierstutzen 4 sowie das in den Aufnahmeraum 2 eingeschobene Kontaktlinsenetui 13 völlig abgedeckt sind. Dabei nimmt die Höhlung 21 bei aufgestecktem Zustand des Deckels 5 den aus dem Grundkörper 1 herausragenden Teil des Kontaktlinsenetuis 13 sowie den am Grundkörper 1 hervorstehenden Dosierstutzen 4 mit aufgeschraubter Verschlußkappe 20 auf.

### Zusammenstellung der Bezugszeichen

- 1: Grundkörper
- 2: Aufnahmeraum
- 3: Flüssigkeitskammer
- 4: Dosierstutzen
- 5: Deckel
- 6: Bodenplatte von 1
- 7: Deckplatte von 1
- 8: Stirnwand von 1
- 9, 9': Seitenwand von 1
- 10: Rückwand von 1
- 11: Zwischenplatte von 1
- 12, 12': Innenwand von 1
- 13: Kontaktlinsenetui
- 14: Öffnung von 2
- 15, 15': L-Schenkel
- 16: Gewindeloch
- 17: Hohlzylinder
- 18, 18': Zylinderabschnitt
- 19: Auflagering
- 20: Verschlußkappe
- 21: Höhlung

## Patentansprüche

1. Behältnis für Kontaktlinsen und einen Vorrat an Kontaktlinsenflüssigkeit, **gekennzeichnet** durch
- einen Grundkörper (1) mit einem Aufnahmeraum (2) für ein herausnehmbares Kontaktlinsenetui (13),
- einer den Aufnahmeraum (2) teilweise umgebenden Flüssigkeitskammer (3) für die Kontaktlinsenflüssigkeit, und
- einem Dosierstutzen (4), der an der Flüssigkeitskammer (3) angebracht ist.

2. Behältnis nach Anspruch 1, dadurch **gekennzeichnet**, daß
- es die Form eines rechteckigen Quaders mit einer ebenen Stirnwand (8) hat,
- der Aufnahmeraum (2) von der Stirnwand (8) her zugänglich ist,
- der Dosierstutzen (4) an der Stirnwand (8) angeordnet ist, und
- eine Abdeckung für die Stirnwand (8) vorgesehen ist.

3. Behältnis nach Anspruch 1 oder 2, dadurch **gekennzeichnet**, daß der Aufnahmeraum (2) rechteckig ausgebildet ist.

4. Behältnis nach einem der Ansprüche 1 bis 3, dadurch **gekennzeichnet**, daß die Flüssigkeitskammer (3) im Querschnitt L-förmig ausgebildet ist, wobei die beiden L-Schenkel (15, 15') den Aufnahmeraum (2) einschließen.

5. Behältnis nach einem der Ansprüche 1 bis 4, dadurch **gekennzeichnet**, daß
- an der Stirnwand (8) ein Gewindeloch (16) mit einem linksdrehenden Innengewinde vorgesehen ist,
- der Dosierstutzen (4) als zweifach abgestufter Hohlzylinder (17) ausgebildet ist, der von einem ersten Zylinderabschnitt (18) über einen flachen Auflagering (19) in einen zweiten Zylinderabschnitt (18') übergeht, wobei der zweite Zylinderabschnitt (18') einen geringeren Außendurchmesser als der erste Zylinderabschnitt (18) aufweist,
- der erste Zylinderabschnitt (18) ein linksdrehendes Außengewinde und der zweite Zylinderabschnitt (18') ein rechtsdrehendes Außengewinde trägt, und
- auf den zweiten Zylinderabschnitt (18') eine Verschlußkappe (20) aufschraubbar ist.

6. Behältnis nach einem der Ansprüche 1 bis 5, dadurch **gekennzeichnet**, daß die Abdeckung als aufsteckbarer Deckel (5) ausgebildet ist.
